# EUROPEAN PATENT SPECIFICATION

(11) **EP 0 636 505 B1**
(45) Date of publication and mention of the grant of the patent: **29.12.1997**
(21) Application number: 94111205.4
(22) Date of filing: 19.07.1994
(51) Int. Cl.: B60K 15/04, B60K 15/035, F16L 9/127, B29C 49/04

(54) **Filler unit for a fuel tank, particularly for a motor-vehicle**
Fülleinheit für einen Benzintank, insbesondere für ein Motorfahrzeug
Dispositif pour le remplissage d'un réservoir d'essence, en particulier pour une véhicule à moteur

(30) Priority: 26.07.1993 IT TO930556
(43) Date of publication of application: 01.02.1995
(73) Proprietor: ERGOM MATERIE PLASTICHE S.p.A, I-10071 Borgaro Torinese (Torino) (IT)
(72) Inventor: Cimminelli, Francesco, I-10143 Torino (IT)
(74) Representative: Rambelli, Paolo

(56) References cited:
- EP-A- 0 223 931
- EP-A- 0 245 613
- EP-A- 0 311 756
- EP-A- 0 515 735
- DE-A- 4 032 869
- DE-A- 4 111 529
- DE-U- 8 630 617
- GB-A- 2 247 880
- JP-A- 4 140 587
- US-A- 3 187 936
- US-A- 3 330 439
- US-A- 4 056 344
- US-A- 5 186 875
- PATENT ABSTRACTS OF JAPAN vol. 9, no. 114 (M-380) (1837) 18 May 1985 & JP-A-60 001 025 (NISSAN JIDOSHA K.K.) 7 January 1985
- KUNSTSTOFFE, vol.83, no.3, March 1993, MUNCHEN pages 182 - 185, XP000349320 N. FISCHER 'Mehrschichtige Kunststoffrohre für Kraftstoffleitungen'

## Description

The present invention relates to a filler unit for a fuel tank, particularly for a motor-vehicle tank, of the type indicated in the precharacterising part of Claim 1.

US-A-3187936 discloses such a filler unit.

Filler units are known which comprise a fuel inlet pipe and a breather pipe both formed from separate corrugated pipes produced by extrusion of a polyamide-based material, and thus effecting a tight seal with respect to hydrocarbons, but, owing to their high degree of flexibility, these units are awkward to mount and require the use of a plurality of reciprocal connection members and of further elements for fixing to the body disposed along the units in order to enable them to fit along a predetermined path inside the body.

Filler units are also known in which the fuel inlet pipe and the breather pipe are produced as a single rigid piece of polyethylene by means of a blow-moulding process, the units frequently being subjected to an expensive and harmful fluoridisation process which only improves their sealing partially owing to the poor sealing effect with respect to hydrocarbons which is typical of polyethylene.

The main object of the present invention is to propose a filler unit of the above-mentioned type provided with an optimal sealing effect with respect to hydrocarbons and which simultaneously permits easy and rapid fitting of the whole unit on the motor-vehicle.

This object is achieved by virtue of the features set forth in Claim 1.

By virtue of the above characteristics, the filler unit according to the invention is produced with a minimum number of parts, which enables the overall sealing effect of the unit to be optimised, since only a small number of connections is required between the elements of the unit. In particular, the seal connections which are mainly subject to losses owing to imperfections in the seals which can wear over time, are reduced to the minimum.

Furthermore, the filler unit to which the present invention relates can be fitted extremely simply and quickly and is notable in that its weight is lower than similar units of known type.

Preferably, the filler unit comprises a connection rib which is formed integrally with both pipes and which extends at least over a greater part of their common length.

In this way, the unit is strengthened by the connection rib even though the pipes have thin walls, with all the advantages of the reduction in the overall weight of the unit, and further enabling the pipes to have a large internal section with the same external volume. Furthermore, the pipes can have a predetermined degree of flexibility, which is useful, for example, for avoiding pipe fractures in the event of knocks, whilst the whole unit, by virtue of the presence of the rib, is substantially rigid such that its shape is adapted faithfully to a predetermined path relative to the body. The connection rib lends itself particularly to being used as a support portion for accessory elements of the unit, such as securing brackets or devices for connecting auxiliary pipes to the unit, enabling work on the walls of the pipes of the unit to be avoided, which pipes might not be suitable for these purposes owing to their thinness.

The subject of the present invention is also a process for producing coupled tubular pipes of plastics material, particularly for a filler unit for a tank of a motor-vehicle, having the features stated in Claim 26.

US-A-3187936 discloses the features of the precharacterizing part of claim 26.

By virtue of this process it is possible to obtain a filler unit made of polyamide which, unlike polyethylene, enables an optimal seal with respect to hydrocarbons to be obtained for the whole filler unit and moreover enables advantage to be taken of a substantial reduction in the overall production costs, avoiding having to subject the unit to a final fluoridisation process, which involves the use of very harmful substances.

Further characteristics and advantages of the present invention will become clearer from the following detailed description, given with reference to the appended drawings and for purely non-limiting purposes, in which:

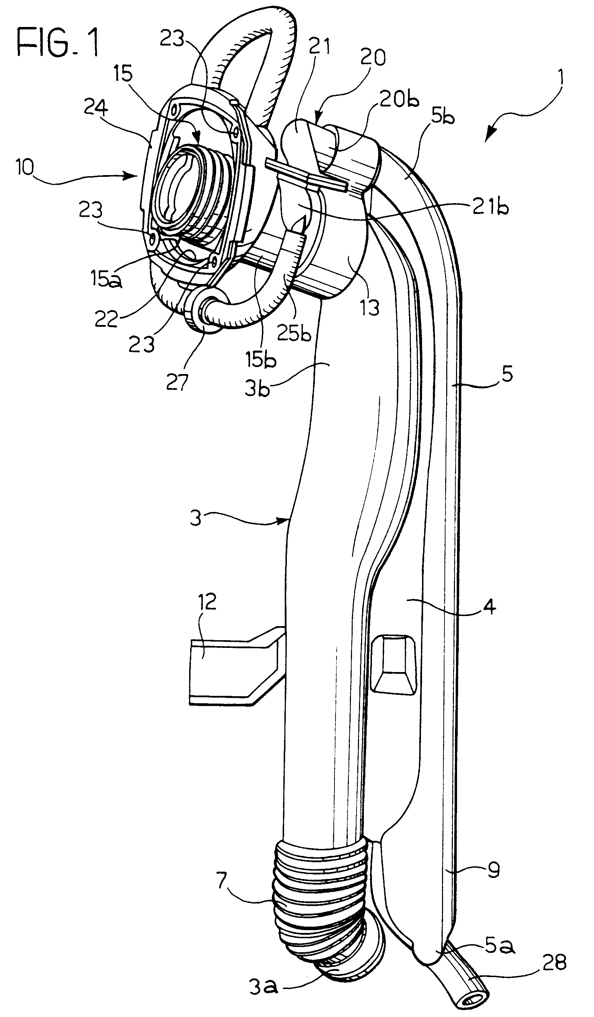

Figure 1 is a perspective view of the filler unit according to the invention;

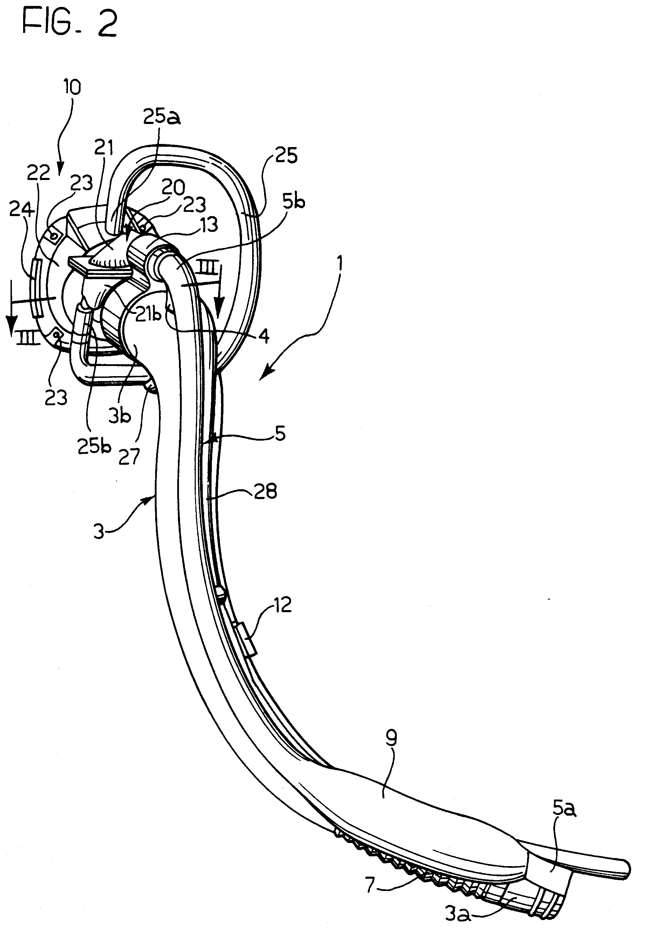

Figure 2 is a view similar to Figure 1 from a different angle; and
Figure 3 is an elevation view of a detail of Figure 2 taken along the line III-III.

With reference to the embodiment shown in the drawings, a filler unit comprising a tubular fuel inlet pipe 3 and a tubular breather pipe 5 having a smaller cross-section than the pipe 3, disposed adjacent one another, is generally indicated 1. A rib 4, principally having the function of strengthening the structure of the unit 1, having a generally flattened shape and extending over at least a greater part of the common length of the pipes 3 and 5, is formed between the pipes 3 and 5.

The pipes 3 and 5 have respective first ends 3a, 5a which are connectible to a tank (not shown in the drawings). The second end 3b of the pipe 3 is associated with connection means 10 enabling the unit 1 to be fixed in correspondence with an opening in the motor-vehicle body (not shown). The second end 5b of the pipe 5 is connected to the pipe 3, for example in correspondence with the connection means 10, as will become clear from the following description.

The pipes 3 and 5 and the rib 4 are produced in a single, substantially rigid piece of polyamide-based plastics material. The rib 4 preferably extends along the entire common length of the pipes 3 and 5, with the exclusion of the end zones 3a, 5a and 3b, 5b.

The fuel inlet pipe 3 preferably has an easily flexible, integral bellows portion 7 disposed in the vicinity of the end 3a in order to assist the tank-connection operation, and the breather pipe 5 is provided with an expansion tank 9 which is disposed adjacent the bellows portion 7 and the function of which is to prevent backflow during the admission of fuel through the pipe 3, and which can advantageously be produced integrally with the pipe 5. Alternatively, the bellows portion 7 and/or the expansion tank 9 can be produced separately from the pipes 3, 5 and subsequently be connected to the latter in any known manner.

A bracket 12 is also provided which is preferably integral or rendered integral with the rib 4, for securing the unit 1 to the motor-vehicle. The bracket 12, which may, for example, be provided near to the centre of gravity of the unit 1, enables a greater part of the weight of the unit 1 to be supported, or it may also have the sole function of an intermediate positioning member to the central part of the filler 1. Alternatively, the bracket 12 could be supported on a panel disposed so as to surround the intermediate portion of the filler.

The connection means 10 comprise a main tubular body 15 having an end 15a provided with a threaded portion of known type enabling a cap to be screwed on (not shown in the drawings). The opposite end 15b of the tubular body 15 is intended to receive externally the second end 3b of the fuel inlet pipe 3 with the interposition of a pair of sealing rings 30.

An elbowed second tubular body 20, having a smaller cross-section than the tubular member 15, is disposed so as to extend partially parallel to the tubular body 15 and comprises a portion 20b on which the end 5b of the breather pipe 5 is fitted. The secondary body 20 further comprises a connection duct 21 between the tubular body 15 and the portion 20b, which opens into a side chamber 21b provided in the substantially central part of the tubular body 15.

The tubular body 15 further comprises a cup flange 22 or mouthpiece, provided with four holes 23, to be secured by four screws with the interposition of a seal 24, in correspondence with the above aperture provided in the motor-vehicle body. The cup element 22 has a hole 29a delimited by a cylindrical wall 29 on which a downflow pipe 28 is fitted with the interposition of a cylindrical connection element 29b. The function of the pipe 28 is to collect liquids which can accumulate inside the cup element 2 enabling them to be discharged into a part below the motor-vehicle, thus avoiding overflows from the cup element 22 along the outer surface of the body. The downflow pipe 28 is connected to the unit 1 at one or more points by one or more snap-engagement members of known type, preferably provided on the rib 4 and integral therewith, for example on the bracket 12.

An air passage pipe 25 is connected with one of its ends 25a in correspondence with another hole provided in the wall of the cup element 22 and with the opposite end 25b in correspondence with the side chamber 21b. Along the pipe 25 is interposed a two-way calibrated safety valve 27 the function of which is to avoid excess pressure building up inside the fuel assembly. In particular, the valve 27 allows air to pass in both directions until a predetermined pressure threshold is reached, whilst it only allows gas to pass from the exterior to the tank when this threshold is exceeded.

The second ends 3b, 5b of the pipes 3 and 5 in this case have terminal portions which are substantially coplanar such that, when they are fitted onto the ends 15b and 20b respectively of the tubular members 15 and 20, both can be clamped by a single sealing member 13 the shape of which is substantially a figure-of-eight and which is co-moulded about the ends 3b and 5b of the pipes 3, 5 and the bodies 15 and 20. This member 13 enables the pipes 3 and 5 simultaneously to be connected simply and quickly to the connection means 10, so as to ensure an optimal seal of the connection.

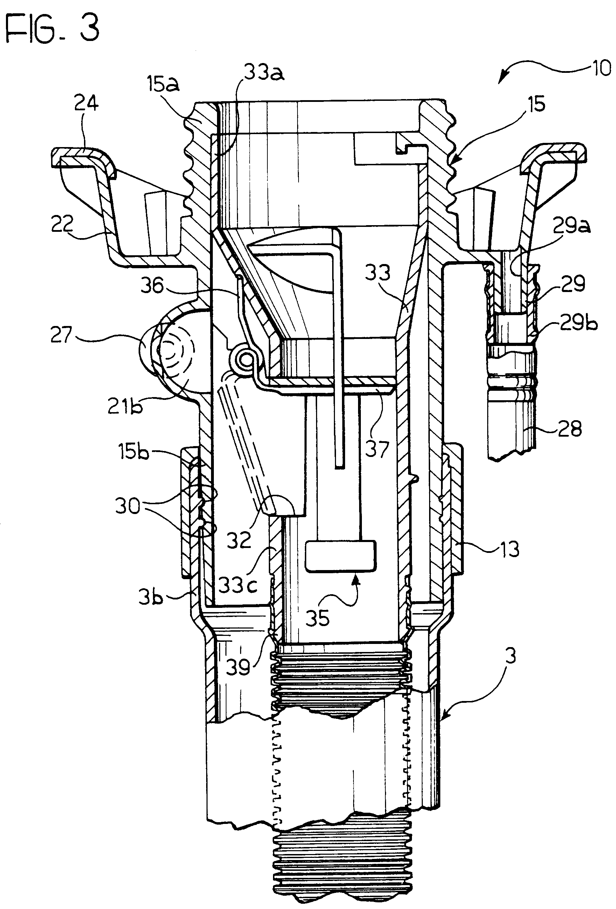

A hollow restrictor element 33 which has a wider inlet section 33a, a substantially conical intermediate portion 33b and a narrow outlet end 33c is inserted inside the tubular body 15. The restrictor element is secured internally to the body 15 by snap-engagement means 35 of known type and only shown schematically in Figure 3.

The narrow outlet end 33c comprises a side aperture 32 through which is disposed a pivoting baffle 37 stressed resiliently by a wire spring 36 towards a transverse position inside the restrictor element 33, so as to close the cavity thereof. By introducing a fuel delivery nozzle through the body 15 and thus inside the restrictor element 33, the baffle 37 moves into a position which is substantially tangential to the restrictor element 33, overcoming the resilient force of the spring 36, so as to open the cavity in the element 33.

In correspondence with the end 33c a corrugated tube 38 is fitted on the restrictor element 33, the function of the tube 38 being to direct the flow of fuel so as to avoid the formation of backflows and counterpressure during the admission of fuel through the pipe 3, and being disposed substantially coaxially inside the pipe 3 and being locked in position by additional snap-engagement means 39 provided on the end 33c.

According to a variant of the invention not shown in the drawings, the end 5b of the breather pipe 5 opposite the end 5a for connection to the tank is connected directly in correspondence with an intermediate zone of the fuel inlet pipe 3, spaced apart from the end 3b. In this case, the rib 4, which always extends over a greater part of the common length of the pipes 3 and 5, is formed starting at this connection zone and ending close to the ends 3a and 5b of the two pipes 3, 5. Preferably, the portion 5b connecting the breather pipe 5 to the pipe 3 is shaped such that it prevents or restricts the possibility of fuel being able to pass into the latter during the filling stage, for example this portion 5b can have an elbowed loop with the function of a syphon. Moreover, the corrugated tube 38 can extend beyond the zone connecting the pipe 5 to the pipe 3 in the direction of the end 3a, for the same function.

It will be appreciated that, in the event of the pipe 5 being connected in an intermediate zone of the pipe 3, the secondary tubular body 20 is not used since the pipes 3 and 5 are already formed in the connected state, and the sealing member 13 is produced, for example, by an annular element co-moulded about the end 3b of the fuel introduction pipe 3 so as to secure it directly to the end 15b of the tubular body 15.

The assembly of the filler unit 1 inside the motor-vehicle is rendered particularly simple by the fact that it is a single element of substantially rigid plastics material which only requires very few positioning means along its length, since the substantial rigidity of shape is already such that it is maintained along a predetermined path along a portion of the body. Since this unit is substantially rigid, the bellows part 7, which has a high degree of deformability, enables the connection to a tank inlet aperture to be rendered simpler even when the entire unit is already mounted in its definitive position, and also allows dimensional variations and vibrations originating during the operation of the motor-vehicle to be absorbed.

The process for producing the filler unit according to the invention comprises an initial stage for extruding, in a thermoplastic state, a preliminary tubular body or "parison" of polyamide-based plastics material containing a percentage of an elastomer which is sufficient to enable a blow-moulding process to be performed. The length of the parison is substantially equal to the final length of the unit consisting of the pipes 3 and 5.

Before the unit 1 is shaped, the parison is disposed in an open hollow mould shaped so as to define the outer surface of the adjacent pipes 3 and 5 connected to one another by the rib 4. In particular, when these elements are provided integrally with the unit comprising the pipes 3, 5 and the rib 4, the inside of the hollow mould also defines the outer shapes of the expansion tank 9, the bellows portion 7, the connection bracket 12 and the retaining members for the anchorage of the tube 28.

Subsequently, with the mould closed, a pressurised fluid is introduced into the parison according to the technique of blow-moulding, which causes the parison to expand against the walls defined by the mould. When the mould has cooled, the unit comprising the pipes 3 and 5 connected by the rib 4 is extracted from the mould and can then undergo manual and/or automatic finishing operations.

This production process permits the use of a polyamide-based plastics material which has remarkable sealing characteristics with respect to hydrocarbons and which can be processed by blow-moulding by virtue of the fact that it contains at least a percentage of an elastomer. The filler unit which is obtained by this process is relatively lightweight owing to the thinness of the walls of the pipes 3, 5 but at the same time it is extremely resistant by virtue of the presence of the rib 4 and, whilst having the same external volume, enables pipes to be obtained which have greater internal cross-sections than those which could be obtained using polyethylene, which requires thick walls, owing to its unsatisfactory degree of sealing with respect to hydrocarbons, and frequently an expensive and harmful final fluoridisation process.

Preferably, the parison from which the final filler unit is obtained is produced with integral longitudinal portions of materials having different degrees of rigidity.

In order to attain this characteristic, during the extrusion of the parison, a so-called radial co-extrusion stage is performed which, from a given polyamide base, enables different percentages of an elastomer to be introduced during the extrusion of the parison so as to obtain mechanical characteristics which can vary along the axis of the parison, and in particular different degrees of rigidity in predetermined zones of the parison. The pipes 3, 5 are thus, more rigid in correspondence with their substantially central parts and with the second ends 3b, 5b, which are made from a polyamide-based plastics material which is modified by the introduction of a concentration of elastomer which is only sufficient to permit its blow- moulding, whilst, in the vicinity of their first ends 3a, 5a they are produced from a polyamide-based plastics material which is modified by the introduction of a concentration of elastomer which is higher than the remaining part of the pipes, which determines greater flexibility of the bellows portion 7 and of the expansion tank 9.

It is thus clear from the above description that, by virtue of the invention, it is possible to obtain a filler unit which has better sealing with respect to hydrocarbons than previously known units without requiring a fluoridisation process, and to enable the pipes 3, 5 to be produced with thinner walls by virtue of the use of a polyamide, with all the advantages of a greater area for the useful cross-sections of the fuel inlet pipe 3 and breather pipe 5 and with a reduced overall weight of the whole unit.

## Claims

1. A filler unit for a fuel tank, particularly for a motor-vehicle, comprising:
a first tubular pipe (3) for the admission of fuel and a second, tubular breather pipe (5), disposed adjacent one another and having respective first ends (3a, 5a) to be connected to the tank,
in which the second end (5b) of the breather pipe (5) is connected to the fuel inlet pipe (3), and connection means (10) are present which are associated with the second end (3b) of the fuel inlet pipe (3) in order to enable it to be anchored in correspondence with an opening provided in the motor-vehicle body, both tubular pipes (3, 5) being formed in a substantially rigid single piece produced from a polyamide-based plastics material,
characterized in that the fuel inlet pipe (3) is provided with a bellows portion (7) in the vicinity of its first end (3a).

2. A unit according to Claim 1, characterized in that said bellows portion (7) is integral with the fuel inlet pipe (3).

3. A unit according to Claim 1 or 2, characterised in that it comprises a connection rib (4) which is formed integrally with both tubular pipes (3, 5) and which extends over at least the majority of their common length.

4. A unit according to Claim 2 or 3, characterized in that the breather pipe (5) comprises an integral expansion tank (9) disposed in the vicinity of its first end (5a).

5. A unit according to Claim 3 or 4, characterized in that it comprises at least one support bracket (12) integral with the first (3) and second (5) pipes.

6. A unit according to Claim 5, characterized in that the support bracket (12) is fixed in correspondence with the connection rib (4).

7. A unit according to any one of Claims 1 to 6, characterized in that the breather pipe (5) is connected to the fuel inlet pipe (3) in an intermediate zone thereof and in that the breather pipe (5) has a substantially siphon-like arrangement in correspondence with the connection zone.

8. A unit according to any one of Claims 1 to 7, characterized in that both pipes (3, 5) have parts provided with different degrees of rigidity and produced integrally with one another, which can be achieved by a co-extrusion process.

9. A unit according to Claim 8, characterized in that the tubular pipes (3, 5) comprise an integral portion produced from a material which is more flexible than the remaining part of the two pipes (3, 5) disposed in the vicinity of the respective first ends (3a, 5a).

10. A unit according to Claim 9, characterized in that both tubular pipes (3, 5) are produced from a polyamide-based material comprising a concentration of elastomer which is sufficient to permit blow-moulding of the pipes (3, 5) in correspondence with their second ends (3b, 5b) and of their substantially central parts, and with a polyamide-based material comprising a higher percentage of elastomer relative to the above concentration, in the vicinity of their first ends (3a, 5a) so as to impart greater flexibility to the first ends (3a, 5a) than the remaining parts of the two pipes (3, 5).

11. A unit according to any one of Claims 1 to 10, characterized in that the two tubular pipes (3,5) can be shaped by a blow-moulding process.

12. A unit according to Claim 1 or 7, characterized in that the connection means (10) comprise a main tubular member (15) provided at one end with a threaded portion (15a) allowing a cap to be screwed on, this main body (15) being able to be connected at the opposite end to the second end (3b) of the fuel inlet pipe (3).

13. A unit according to Claim 12, characterized in that the main tubular body (15) is associated with a secondary tubular body (20) having a portion (20b) which is substantially parallel to the main tubular body (15) which is to be connected to the second end (5b) of the breather pipe (5), the main and secondary tubular bodies (15, 20) communicating with one another.

14. A unit according to Claim 12 or Claim 13, characterized in that the main tubular body (15) has a cup element (22) which can be secured to the motor-vehicle body.

15. A unit according to Claim 14, characterized in that the cup element (22) is provided with a pipe (25) for the passage of gas which is connected to the secondary tubular body (20), a two-way safety valve (27) being interposed in the gas passage pipe (25).

16. A unit according to Claim 14 or Claim 15, characterized in that the cup element (22) is provided with a downflow pipe (28) for liquids, connected to the rib (4) by snap-engagement means provided integrally on the rib (4).

17. A unit according to any one of Claims 12 to 16, characterized in that the second ends (3b, 5b) of the fuel inlet pipe (3) and breather pipe (5) have substantially co-planar respective terminal portions which are both connected to the connection means (10) by co-moulding in a single sealing part (13) which is substantially in the shape of a figure-of-eight.

18. A unit according to Claim 17, characterized in that at least one annular seal (30) is interposed between the fuel inlet pipe (3) and the main tubular body (15).

19. A unit according to any one of Claims 12 to 16, characterized in that a hollow restrictor element (33) having an inlet end (33a) facing the threaded portion (15a) and an opposite outlet end (33c) with a narrow section relative to the inlet end (33a) is disposed inside the main tubular body (15).

20. A unit according to Claim 19, characterized in that the hollow restrictor element (33) is connected internally to the above main tubular body (15) by snap-engagement means (35).

21. A unit according to Claim 19, characterized in that the hollow restrictor element (33) comprises a pivoting baffle (37) which can move normally in a transverse position inside the restrictor element (33) so as to close its cavity and being able to be moved into a position which is substantially tangential to the restrictor element (33), overcoming a resilient return force, following the ingress of a body through the narrow outlet end (33c).

22. A unit according to Claim 19, characterized in that a flow directing member (38) is connected to the outlet end (33c) of the restrictor element (33).

23. A unit according to Claim 22, characterized in that the flow directing member (38) extends beyond a connection zone of the breather pipe (5) to the fuel inlet pipe (3) in the direction of the first end (3a) of the pipe (3).

24. A unit according to Claim 22 or 23, characterised in that the flow directing unit (38) is connected to the restrictor element (33) by snap-engagement means (39).

25. A unit according to any one of Claims 22 to 24, characterized in that the flow directing unit comprises a corrugated tube (38) disposed substantially coaxially inside the fuel introduction pipe (3).

26. A process for producing coupled tubular pipes (3, 5) of plastics material, particularly for a filler unit (1) for a motor-vehicle tank, the coupled tubular pipes (3, 5) being obtainable by successive operations of extruding and blow-moulding a polyamide-based material, and comprises:
the extrusion of a preliminary tubular body or "parison" having a predetermined length, and
blow-moulding the "parison" in a hollow mould defining the outer surface of at least a first and a second tubular pipe (3, 5) disposed adjacent one another and jointly having at least one connection portion (4), by supplying a pressurised fluid to the closed mould inside the tubular pipes (3, 5),
characterised in that during the blow-moulding stage of the "parison" a bellows portion (7) in the vicinity of an end (3a) of the first (3) of the tubular pipes (3, 5) is formed.

27. A process according to Claim 26, characterized in that an integral strengthening rib (4) interposed between the first and the second tubular pipes (3, 5) and extending at least over the greater part of their common length is provide during the blow-moulding stage of the "parison".

28. A process according to Claim 27, characterized in that the extrusion operation comprises a co-extrusion stage during which the "parison" is produce with at least two integral portions of polyamide-based materials having respective degrees of rigidity different to one another.

29. A process according to any one of Claims 26 to 28, characterized in that the hollow mould is shaped so as to define at least a bracket (12) integral with the strengthening rib (4).

30. A process according to any one of Claims 26 to 29, characterized in that the hollow mould is shaped so as to define snap-engagement means integral with the rib (4) for securing a downflow pipe (28) for liquids.

## Patentansprüche

1. Fülleinheit für einen Brennstofftank, insbesondere für ein Motorfahrzeug, umfassend:
eine erste röhrenförmige Leitung (3) für die Zufuhr von Brennstoff und eine zweite röhrenförmige Entlüftungsleitung (5), die einander benachbart angeordnet sind und jeweilige erste Enden (3a, 5a) haben, die mit dem Tank zu verbinden sind,
wobei das zweite Ende (5b) der Entlüftungsleitung (5) mit der Brennstoffzufuhrleitung (3) verbunden ist und Verbindungsmittel (10) vorhanden sind, die mit dem zweiten Ende (3b) der Brennstoffzufuhrleitung (3) verbunden sind, um zu ermöglichen, daß es korrespondierend zu einer in der Motorfahrzeug-Karosserie vorgesehenen Öffnung befestigbar ist, wobei beide röhrenförmigen Leitungen (3, 5) aus einem einzigen, im wesentlichen steifen, aus einem auf Polyamid basierenden Kunststoffmaterial hergestellten Stück geformt werden,
dadurch gekennzeichnet, daß die Brennstoffzufuhrleitung (3) mit einem Faltenbalgteil (7) in der Nähe ihres ersten Endes (3a) ausgestattet ist.

2. Einheit gemäß Anspruch 1, dadurch gekennzeichnet, daß der Faltenbalgteil (7) mit der Brennstoffzufuhrleitung (3) eine Einheit bildet.

3. Einheit gemäß Anspruch 1 oder 2, dadurch gekennzeichnet, daß sie eine Verbindungsrippe (4) umfaßt, die mit den beiden röhrenförmigen Leitungen (3, 5) eine Einheit bildend geformt wird und die sich zumindest über den größeren Teil ihrer gemeinsamen Länge erstreckt.

4. Einheit gemäß Anspruch 2 oder 3, dadurch gekennzeichnet, daß die Entlüftungsleitung (5) einen integralen Expansionstank (9) umfaßt, der in der Nähe ihres ersten Endes (5a) angeordnet ist.

5. Einheit gemäß Anspruch 3 oder 4, dadurch gekennzeichnet, daß sie zumindest eine mit der ersten (3) und zweiten (5) Leitung eine Einheit bildende Tragestütze (12) umfaßt.

6. Einheit gemäß Anspruch 5, dadurch gekennzeichnet, daß die Tragestütze (12) in Entsprechung mit der Verbindungsrippe (4) fixiert ist.

7. Einheit gemäß einem der Ansprüche 1 bis 6, dadurch gekennzeichnet, daß die Entlüftungsleitung (5) mit der Brennstoffzufuhrleitung (3) in einer Zwischenzone derselben verbunden ist und daß die Entlüftungsleitung (5) eine im wesentlichen Siphon-artige Anordnung in Entsprechung mit der Verbindungszone hat.

8. Einheit gemäß einem der Ansprüche 1 bis 7, dadurch gekennzeichnet, daß beide Leitungen (3, 5) Teile haben, die mit unterschiedlichen Graden an Steifigkeit ausgestattet sind und untereinander eine Einheit bildend hergestellt werden, was durch ein Co-Extrusionsverfahren erreicht werden kann.

9. Einheit gemäß Anspruch 8, dadurch gekennzeichnet, daß die röhrenförmigen Leitungen (3, 5) einen integralen Teil umfassen, der aus einem Material hergestellt ist, das flexibler als der verbleibende Teil der zwei Leitungen (3, 5) ist, der in der Nähe der jeweiligen ersten Enden (3a, 5a) angeordnet ist.

10. Einheit gemäß Anspruch 9, dadurch gekennzeichnet, daß beide röhrenförmigen Leitungen (3, 5) aus einem auf Polyamid basierenden Material hergestellt werden, das eine Konzentration eines Elastomers umfaßt, die ausreichend ist, um ein Blasformen der Leitungen (3, 5) in Entsprechung mit deren zweiten Enden (3b, 5b) und ihrer im wesentlichen zentralen Teile zu erlauben, und wobei ein auf Polyamid basierendes Material in der Nähe ihrer ersten Enden (3a, 5a) einen höheren Prozentgehalt an Elastomer relativ zu der obigen Konzentration umfaßt, um so den ersten Enden (3a, 5a) größere Flexibilität als den verbleibenden Teilen der zwei Leitungen (3, 5) zu verleihen.

11. Einheit gemäß einem der Ansprüche 1 bis 10, dadurch gekennzeichnet, daß die zwei röhrenförmigen Leitungen (3, 5) durch ein Blasformverfahren geformt werden können.

12. Einheit gemäß Anspruch 1 oder 7, dadurch gekennzeichnet, daß die Verbindungsmittel (10) ein röhrenförmiges Hauptglied (15) umfassen, das an einem Ende mit einem Gewindeteil (15a) ausgestattet ist, der erlaubt, eine Kappe aufzuschrauben, wobei dieser Hauptkörper (15) am gegenüberliegenden Ende mit dem zweiten Ende (3b) der Brennstoffzufuhrleitung (3) verbunden werden kann.

13. Einheit gemäß Anspruch 12, dadurch gekennzeichnet, daß der röhrenförmige Hauptkörper (15) mit einem röhrenförmigen Nebenkörper (20) verbunden ist, der einen Teil (20b) hat, welcher im wesentlichen parallel zum röhrenförmigen Hauptkörper (15) ist, der mit dem zweiten Ende (5b) der Entlüftungsleitung (5) zu verbinden ist, wobei der röhrenförmige Haupt- und Nebenkörper (15, 20) miteinander in Verbindung stehen.

14. Einheit gemäß Anspruch 12 oder Anspruch 13, dadurch gekennzeichnet, daß der röhrenförmige Hauptkörper (15) ein Becherelement (22) hat, das an der Motorfahrzeug-Karosserie befestigt werden kann.

15. Einheit gemäß Anspruch 14, dadurch gekennzeichnet, daß das Becherelement (22) mit einer Leitung (25) zum Durchfluß von Gas ausgestattet ist, die mit dem röhrenförmigen Nebenkörper (20) verbunden ist, wobei ein Zweiweg-Sicherheitsventil (27) in der Gasdurchflußleitung (25) zwischengeschaltet ist.

16. Einheit gemäß Anspruch 14 oder Anspruch 15, dadurch gekennzeichnet, daß das Becherelement (22) mit einer Abwärtsfließleitung (28) für Flüssigkeiten ausgestattet ist, die mit der Rippe (4) durch Schnappeingriffsmittel, die integral an der Rippe (4) vorgesehen sind, verbunden ist.

17. Einheit gemäß einem der Ansprüche 12 bis 16, dadurch gekennzeichnet, daß die zweiten Enden (3b, 5b) der Brennstoffzufuhrleitung (3) und Entlüftungsleitung (5) im wesentlichen jeweils coplanare Anschlußteile haben, die beide mit den Verbindungsmitteln (10) durch Mitformen in einem einzelnen Dichtteil (13), der im wesentlichen eine Achterform hat, verbunden sind.

18. Einheit gemäß Anspruch 17, dadurch gekennzeichnet, daß zumindest eine ringförmige Dichtung (30) zwischen der Brennstoffzufuhrleitung (3) und dem röhrenförmigen Hauptkörper (15) zwischengeschaltet ist.

19. Einheit gemäß einem der Ansprüche 12 bis 16, dadurch gekennzeichnet, daß ein hohles Verengungselement (33) mit einem Einlaßende (33a), das dem Gewindeteil (15a) gegenübersteht, und einem gegenüberliegenden Auslaßende (33c) mit einem engen Querschnitt relativ zum Einlaßende (33a) im röhrenförmigen Hauptkörper (15) angeordnet ist.

20. Einheit gemäß Anspruch 19, dadurch gekennzeichnet, daß das hohle Verengungselement (33) innen mit dem obigen röhrenförmigen Hauptkörper (15) durch Schnappeingriffsmittel (35) verbunden ist.

21. Einheit gemäß Anspruch 19, dadurch gekennzeichnet, daß das hohle Verengungselement (33) eine schwenkbare Prallfläche (37) umfaßt, die sich normal in eine transversale Position im Verengungselement (33) bewegen kann, um so seinen Hohlraum zu schließen, und imstande ist, in eine Position bewegt zu werden, die im wesentlichen tangential zum Verengungselement (33) ist, wobei sie eine elastische Rückstellkraft als Folge des Eindringens eines Körpers durch das enge Auslaßende (33c) überwindet.

22. Einheit gemäß Anspruch 19, dadurch gekennzeichnet, daß ein Flußleitglied (38) mit dem Auslaßende (33c) des Verengungselements (33) verbunden ist.

23. Einheit gemäß Anspruch 22, dadurch gekennzeichnet, daß das Flußleitglied (38) sich über eine Verbindungszone der Entlüftungsleitung (5) zur Brennstoffzufuhrleitung (3) in Richtung des ersten Endes (3a) der Leitung (3) erstreckt.

24. Einheit gemäß Anspruch 22 oder 23, dadurch gekennzeichnet, daß die Flußleiteinheit (38) mit dem Verengungselement (33) durch Schnappeingriffsmittel (39) verbunden ist.

25. Einheit gemäß einem der Ansprüche 22 bis 24, dadurch gekennzeichnet, daß die Flußleiteinheit ein geriffeltes Rohr (38) umfaßt, das im wesentlichen koaxial in der Brennstoffeinführungsleitung (3) angeordnet ist.

26. Verfahren zum Herstellen gekoppelter röhrenförmiger Leitungen (3, 5) aus Kunststoffmaterial, insbesondere für eine Fülleinheit (1) für einen Motorfahrzeugtank, wobei die gekoppelten röhrenförmigen Leitungen (3, 5) durch aufeinander nachfolgende Vorgänge des Extrudierens und Blasformens eines auf Polyamid basierenden Materials erhaltbar sind, und umfaßt:
die Extrusion eines vorläufigen röhrenförmigen Körpers oder 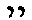 Vorformlings" mit einer vorbestimmten Länge, und
Blasformen des 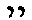 Vorformlings" in einer Hohlform, die die äußere Oberfläche von zumindest einer ersten und einer zweiten röhrenförmigen Leitung (3, 5) definiert, die einander benachbart angeordnet sind und gemeinsam zumindest einen Verbindungsteil (4) haben, durch Zuführen eines Fluids unter Druck zur geschlossenen Form ins Innere der röhrenförmigen Leitungen (3, 5),
dadurch gekennzeichnet, daß während der Blasformstufe des 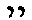 Vorformlings" ein Faltenbalgteil (7) in der Nähe eines Endes (3a) der ersten (3) der röhrenförmigen Leitungen (3, 5) geformt wird.

27. Verfahren gemäß Anspruch 26, dadurch gekennzeichnet, daß eine eine Einheit bildende Verstärkungsrippe (4), die zwischen der ersten und der zweiten röhrenförmigen Leitung (3, 5) zwischengeschaltet ist und sich zumindest über den größeren Teil ihrer gemeinsamen Länge erstreckt, während der Blasformstufe des 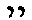 Vorformlings" vorgesehen wird.

28. Verfahren gemäß Anspruch 27, dadurch gekennzeichnet, daß der Extrusionsvorgang eine Co-Extrusionsstufe umfaßt, während der der 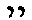 Vorformling" mit zumindest zwei eine Einheit bildenden Teilen eines auf Polyamid basierenden Materials mit jeweils zueinander unterschiedlichen Graden an Steifigkeit hergestellt wird.

29. Verfahren gemäß einem der Ansprüche 26 bis 28, dadurch gekennzeichnet, daß die Hohlform geformt wird, um so zumindest eine mit der Verstärkerrippe (4) eine Einheit bildende Stütze (12) zu definieren.

30. Verfahren gemäß einem der Ansprüche 26 bis 29, dadurch gekennzeichnet, daß die Hohlform geformt wird, um so mit der Rippe (4) eine Einheit bildende Schnappeingriffsmittel zu definieren, um eine Abwärtsfließleitung (28) für Flüssigkeiten zu befestigen.

## Revendications

1. Ensemble de remplissage de réservoir de carburant, notamment destiné à un véhicule à moteur, comprenant :
une première conduite tubulaire (3) destinée à l'admission de carburant et une seconde conduite tubulaire (5) de mise à l'air adjacentes l'une à l'autre et ayant des premières extrémités respectives (3a, 5a) destinées à être raccordées au réservoir,
la seconde extrémité (5b) de la conduite de respiration (5) étant raccordée à la conduite (3) d'entrée de carburant, et un dispositif de connexion (10) étant présent et associé à la seconde extrémité (3b) de la conduite (3) de carburant de manière que celle-ci puisse être fixée à un emplacement correspondant à une ouverture formée dans une carrosserie de véhicule à moteur, les deux conduites tubulaires (3, 5) étant formées en une seule pièce relativement rigide produite en une matière plastique à base de polyamide,
caractérisé en ce que la conduite (3) de carburant comprend une partie de soufflet (7) au voisinage de sa première extrémité (3a).

2. Ensemble selon la revendication 1, caractérisé en ce que la partie de soufflet (7) est solidaire de la conduite d'entrée de carburant (3).

3. Ensemble selon la revendication 1 ou 2, caractérisé en ce qu'il comporte une nervure (4) de raccordement formée afin qu'elle soit solidaire des deux conduites tubulaires (3, 5) et s'étende sur la plus grande partie au moins de leur longueur commune.

4. Ensemble selon la revendication 2 ou 3, caractérisé en ce que la conduite de mise à l'air (5) comporte un réservoir intégré de dilatation (9) placé au voisinage de sa première extrémité (5a).

5. Ensemble selon la revendication 3 ou 4, caractérisé en ce qu'il comporte au moins une équerre de support (12) solidaire de la première conduite (3) et de la seconde conduite (5).

6. Ensemble selon la revendication 5, caractérisé en ce que l'équerre de support (12) est fixée afin qu'elle corresponde à la nervure de connexion (4).

7. Ensemble selon l'une quelconque des revendications 1 à 6, caractérisé en ce que la conduite de mise à l'air (5) est raccordée à la conduite d'entrée de carburant (3) dans une zone intermédiaire et en ce que la conduite de mise à l'air (5) a une disposition pratiquement analogue à un siphon qui correspond à la zone de connexion.

8. Ensemble selon l'une quelconque des revendications 1 à 7, caractérisé en ce que les deux conduites (3, 5) ont des parties possédant des degrés différents de rigidité et produites en une seule pièce, qui peut être obtenu par un procés de co-extrusion.

9. Ensemble selon la revendication 8, caractérisé en ce que les conduites tubulaires (3, 5) comprennent une partie intégrée produite à partir d'un matériau qui est plus flexible que le reste des deux conduites (3, 5) et placée au voisinage des premières extrémités respectives (3a, 5a).

10. Ensemble selon la revendication 9, caractérisé en ce que les conduites tubulaires (3, 5) sont produites à partir d'un matériau à base d'un polyamide ayant une concentration d'un élastomère qui suffit pour permettre un moulage par soufflage des conduites (3, 5) d'une manière qui correspond à leurs secondes extrémités (3a, 5b) et à leurs parties pratiquement centrales, et avec un matériau à base de polyamide contenant un plus grand pourcentage d'élastomère par rapport à la concentration précitée, au voisinage des premières extrémités (3a, 5a) afin qu'une plus grande flexibilité soit obtenue aux premières extrémités (3a, 5a) par rapport aux parties restantes des deux conduites (3, 5).

11. Ensemble selon l'une quelconque des revendications 1 à 10, caractérisé en ce que les deux conduites tubulaires (3, 5) peuvent être mises en forme par une opération de moulage par soufflage.

12. Ensemble selon la revendication 1 ou 7, caractérisé en ce que le dispositif de connexion (10) comporte un organe tubulaire principal (15) ayant, à une première extrémité, une partie filetée (15a) permettant le vissage d'un capuchon, ce corps principal (15) pouvant être connecté, à l'extrémité opposée, à la seconde extrémité (3b) de la conduite d'entrée de carburant (3).

13. Ensemble selon la revendication 12, caractérisé en ce que le corps tubulaire principal (15) est associé à un corps tubulaire secondaire (20) ayant une partie (20b) qui est pratiquement parallèle au corps tubulaire principal (15) qui est destinée à être raccordée à la seconde extrémité (5b) de la conduite de mise à l'air (5), les corps tubulaires principal et secondaire (15, 20) communiquant l'un avec l'autre.

14. Ensemble selon la revendication 12 ou 13, caractérisé en ce que le corps tubulaire principal (15) a un élément en forme de cuvette (22) qui peut être fixé à la carrosserie du véhicule à moteur.

15. Ensemble selon la revendication 14, caractérisé en ce que l'élément en forme de cuvette (22) comporte une conduite (25) pour le passage de gaz, connectée au corps tubulaire secondaire (20), une soupape bidirectionnelle de sécurité (27) étant placée dans la conduite de passage de gaz (25).

16. Ensemble selon la revendication 14 ou 15, caractérisé en ce que l'élément en forme de cuvette (22) a un tube de descente (28) destiné au liquide et connecté à la nervure (4) par un dispositif d'enclenchement élastique formé en une seule pièce sur la nervure (4).

17. Ensemble selon l'une quelconque des revendications 12 à 16, caractérisé en ce que les secondes extrémités (3b, 5b) de la conduite (3) d'entrée de carburant et de la conduite de mise à l'air (5) ont des parties terminales respectives pratiquement coplanaires qui sont toutes deux connectées au dispositif de connexion (10) par moulage simultané dans une seule partie d'étanchéité (13) qui a pratiquement la forme d'un huit.

18. Ensemble selon la revendication 17, caractérisé en ce qu'au moins un joint annulaire d'étanchéité (30) est disposé entre la conduite d'entrée de carburant (3) et le corps tubulaire principal (15).

19. Ensemble selon l'une quelconque des revendications 12 à 16, caractérisé en ce qu'un élément creux (33) de rétrécissement ayant une extrémité d'entrée (33a) tournée vers la partie filetée (15a) et une extrémité opposée de sortie (33c) de section étroite par rapport à l'extrémité d'entrée (33a), est disposé à l'intérieur du corps tubulaire principal (15).

20. Ensemble selon la revendication 19, caractérisé en ce que l'élément creux de rétrécissement (33) est raccordé à l'intérieur au corps tubulaire principal précité (15) par un dispositif d'enclenchement élastique (35).

21. Ensemble selon la revendication 19, caractérisé en ce que l'élément creux de rétrécissement (33) comporte un déflecteur pivotant (37) qui peut se déplacer normalement en position transversale à l'intérieur de l'élément de rétrécissement (33) afin qu'il ferme sa cavité et puisse être déplacé dans une position qui est pratiquement tangente à l'élément de rétrécissement (33), malgré une force élastique de rappel, après l'entrée d'un corps par l'extrémité étroite de sortie (33c).

22. Ensemble selon la revendication 19, caractérisé en ce qu'un organe (38) de direction d'écoulement est raccordé à l'extrémité de sortie (33c)de l'élément de rétrécissement (33).

23. Ensemble selon la revendication 22, caractérisé en ce que l'organe de direction d'écoulement (38) s'étend au-delà d'une zone de connexion de la conduite de mise à l'air (5) à la conduite d'entrée de carburant (3) dans la direction de la première extrémité (3a) de la conduite (3).

24. Ensemble selon la revendication 22 ou 23, caractérisé en ce que l'organe de direction d'écoulement (38) est connecté à l'élément de rétrécissement (33) par un dispositif d'enclenchement élastique (39).

25. Ensemble selon l'une quelconque des revendications 22 à 24, caractérisé en ce que l'organe de direction d'écoulement comporte un tube ondulé (38) ayant une position pratiquement coaxiale à l'intérieur de la conduite d'entrée de carburant (3).

26. Procédé de fabrication de conduites tubulaires couplées (3, 5) de matière plastique, notamment destinées à un ensemble (1) de remplissage de réservoir de véhicule à moteur, des conduites tubulaires couplées (3, 5) pouvant être obtenues au cours d'opérations successives d'extrusion et de moulage par soufflage d'une matière à base de polyamide, le procédé comprenant :
l'extrusion d'un corps tubulaire préliminaire ou "paraison" ayant une longueur prédéterminée, et
le moulage par soufflage de la "paraison" dans un moule creux délimitant une surface externe d'une première et d'une seconde conduite tubulaire au moins (3, 5) qui sont adjacentes l'une à l'autre et qui ont en commun au moins une partie de connexion (4), par transmission d'un fluide sous pression vers un moule fermé à l'intérieur des conduites tubulaires (3, 5),
caractérisé en ce que, pendant l'étape de moulage par soufflage de la "paraison", une partie de soufflet (7) voisine d'une extrémité (3a) de la première (3) des conduites tubulaires (3, 5), est formée.

27. Procédé selon la revendication 26, caractérisé en ce qu'une nervure solidaire de renforcement (4) disposée entre la première et la seconde conduite tubulaire (3, 5) et disposée sur la plus grande partie au moins de leur longueur commune est réalisée pendant l'étape de soufflage de la "paraison".

28. Procédé selon la revendication 27, caractérisé en ce que l'opération d'extrusion comporte une étape de co-extrusion au cours de laquelle la "paraison" est produite avec au moins deux parties solidaires de matières à base de polyamide ayant des degrés respectifs de rigidité qui diffèrent.

29. Procédé selon l'une quelconque des revendications 26 à 28, caractérisé en ce que le moule creux a une configuration telle qu'il délimite au moins une équerre (12) intégrale avec la nervure de renforcement (4).

30. Procédé selon l'une quelconque des revendications 26 à 29, caractérisé en ce que le moule creux a une configuration telle qu'il délimite un dispositif d'enclenchement élastique solidaire de la nervure (4) et destiné à fixer une conduite (28) de descente de liquide.
